# EUROPÄISCHE PATENTSCHRIFT

(11) **EP 0 802 754 B1**
(45) Veröffentlichungstag und Bekanntmachung des Hinweises auf die Patenterteilung: **29.07.1998**
(21) Anmeldenummer: 95943235.2
(22) Anmeldetag: 29.12.1995
(51) Int. Cl.: A47J 31/00, A47J 31/46, A47J 31/10

(54) **VORRICHTUNG ZUM ERHITZEN EINER TRINKBAREN FLÜSSIGKEIT**
DEVICE FOR HEATING A DRINKABLE LIQUID
DISPOSITIF PERMETTANT DE CHAUFFER UN LIQUIDE POTABLE

(30) Priorität: 26.01.1995 DE 29501228 U
(43) Veröffentlichungstag der Anmeldung: 29.10.1997
(73) Patentinhaber: Timm, Eberhard, 21279 Appel (DE)
(72) Erfinder: Timm, Eberhard, 21279 Appel (DE)
(74) Vertreter: Glawe, Delfs, Moll & Partner
(86) Internationale Anmeldenummer: EP9505171
(87) Internationale Veröffentlichungsnummer: WO9622719

(56) Entgegenhaltungen:
- EP-A- 0 479 111
- WO-A-89/10511
- DE-A- 2 121 322
- DE-A- 2 643 557
- DE-U- 8 900 220

## Beschreibung

Die Erfindung betrifft eine Vorrichtung zum Erhitzen einer trinkbaren Flüssigkeit mit einem Flüssigkeitsvorratsbehälter und einem darin angeordneten elektrischen Heizelement, wobei der Flüssigkeitsvorratsbehälter ein Ventil aufweist, das unten im Boden des Flüssigkeitsvorratsbehälters angeordnet ist, dessen eine Dichtfläche der Rand einer Öffnung des Bodens ist und das sich bei vorgegebenem Behälterinnendruck aufgrund Auswölbens des Bodens nach außen nicht selbsttätig umkehrbar öffnet, und wobei die Stromzuführung zum Heizelement so ausgebildet ist, daß sie unterbrochen wird, wenn der Druck im Flüssigkeitsvorratsbehälter im wesentlichen gleich dem Atmosphärendruck ist, welche Vorrichtung auf einen Sammelbehälter für die Flüssigkeit aufsetzbar ist.

Eine bekannte Vorrichtung dieser Art (EP-A-0479111) dient dazu, unterwegs, in erster Linie in Fahrzeugen, sich heiße Getränke oder z.B. auch Suppen aufzubrühen. Man führt zu diesem Zweck, die mit einer trinkbaren Flüssigkeit, insbesondere wassergefüllte Vorrichtung sowie einen Sammelbehälter mit sich. Wünscht man ein heißes Getränk oder eine Suppe zu sich zu nehmen, so setzt man die Vorrichtung auf den Sammelbehälter auf und verbindet die Vorrichtung mit einer elektrischen Stromquelle. Die Flüssigkeit wird dann erhitzt und dehnt sich dabei aus, wobei der Innendruck durch die Ausdehnung der Flüssigkeit möglicherweise im Vorratsbehälter befindliche Gase bzw. durch in der Flüssigkeit enthaltene Gase noch erhöht wird. Ist ein gewisser Überdruck erreicht, so öffnet sich das Ventil irreversibel, und die heiße Flüssigkeit strömt in den Sammelbehälter. Dabei wird ein Getränk oder eine Suppe aufgebrüht, das bzw. die in Form von Trockensubstanz vorher in den Sammelbehälter eingebracht oder z.B. in einem geeigneten flüssigkeitsdurchlässigen Behältnis unten an dem Flüssigkeitsbehälter angebracht ist. Anschließend wird die Vorrichtung entfernt, und man kann die Flüssigkeit aus dem Sammelbehälter trinken bzw. im Falle einer Suppe auch löffeln. Es ist dabei auch bekannt, daß die Vorrichtung wiederverwendbar ist und vom Benutzer erneut mit Flüssigkeit gefüllt werden und in Betriebsbereitschaft gesetzt werden kann.

Die Vorrichtung ist einfach, zweckmäßig und auch sicher. In dem Moment, wo sich nämlich die Flüssigkeit in den Sammelbehälter entleert hat und daher im Flüssigkeitsvorratsbehälter kein Überdruck mehr herrschen kann, wird die Stromzufuhr unterbrochen, so daß das Heizelement nicht mehr weiter erhitzt wird.

Die vorbekannte Vorrichtung hat den Nachteil, daß einerseits die Durchströmfläche des Ventils verhältnismäßig klein ist. Außerdem tritt beim Öffnen des Ventils Reibung der Lippendichtung gegen den ringförmigen Rand der Bodenöffnung auf, was unter Umständen das sichere Öffnen des Ventils verhindert.

Die Aufgabe der Erfindung besteht in Erschaffung einer Vorrichtung der eingangs genannten Art mit einem Ventil, das sicher arbeitet und einen großen Durchströmquerschnitt aufweist. Der große Durchströmquerschnitt hat dabei in vielen Fällen den Vorteil, daß die Getränke gleichmäßiger aufgebrüht werden.

Die erfindungsgemäße Lösung besteht darin, daß die andere Dichtfläche des Ventils ein tellerförmiges Element am elastischen Material ist, das in seinem unbelasteten Zustand im wesentlichen kegelförmig mit zum Inneren des Flüssigkeitsvorratsbehälters gerichteten Kegelspitze geformt ist und an dieser Spitze gehalten wird.

Wie bei dem vorbekannten Ventil ist also eine Dichtfläche des Ventils der Rand der Bodenöffnung. Die andere Dichtfläche ist aber ein tellerförmiges Element aus elastischem Material, das in seinem unbelasteten Zustand so geformt ist, daß es im wesentlichen die Oberfläche eines Kegels einnimmt. Wird der Boden nach innen gedrückt, so kommt der Rand der Bodenöffnung gegen diesen Kegel zu liegen und drückt den Rand des tellerförmigen Elementes nach innen, so daß er hier dichtend unter Vorspannung am Rand der Öffnung anliegt. Erhöht sich der Innendruck und wird der Boden nach außen gedrückt, so folgt zunächst das tellerförmige Element, bis der Boden nach außen schnappt, wobei sich dann die Verbindung zwischen tellerförmigem Element und Rand der Bodenöffnung löst und die Flüssigkeit durch den großen Strömungsquerschnitt ausströmen kann.

Wenn die Vorrichtung am Boden mit einem sich nach außen erweiternden Trichter versehen ist, so kann mit Hilfe dieses Trichters die Flüssigkeit eingefüllt werden. Drückt man dann anschließend auf den Trichter, so drückt man den Boden nach innen, wodurch das Ventil seine geschlossene Stellung einnimmt.

Wenn die Vorrichtung einen Stecker für die Zuleitung elektrischen Stroms aufweist, der einen oder mehrere Stifte enthält, die parallel zur in Gebrauchsstellung vertikalen Achse der Vorrichtung sind, so kann der Stecker in eine entsprechende Steckdose mit ebenfalls vertikalen Bohrungen gesteckt werden, so daß die Vorrichtung in der richtigen Ausrichtung für das Erhitzen der Flüssigkeit gehalten wird. Beim Einstecken des Steckers in die Steckdose wird dann die Vorrichtung senkrecht nach unten bewegt und kann dabei gleichzeitig in einen ebenfalls vertikal aufgestellten Sammelbehälter eingesetzt werden.

Der Sammelbehälter kann ein Siebfilter mit einer mittigen Öffnung aufweisen. Durch die mittige Öffnung kann die Flüssigkeit beim Aufbrühvorgang unbehindert in den Sammelbehälter kommen. Durch das Sieb, das im Randbereich angeordnet ist, werden dann feste Rückstände wie Teeblätter oder Kaffeemehl zurückgehalten, wenn man die Flüssigkeit trinkt. Außerdem wird durch diesen Siebfilter in bewegten Fahrzeugen das Überschwappen der Flüssigkeit verhindert.

Vorteilhafterweise ist erfindungsgemäß ein Behältnis zum Aufnehmen einer Vorrichtung und eines Sammelbehälters der oben genannten Art vorgesehen, das eine Steckdose zum Einführen des Steckers sowie eine Ausnehmung zum Einsetzen des Sammelbehälters aufweist. Dieses Behältnis, das insbesondere kofferartig ausgebildet sein kann, kann leicht auf Reisen mitgenommen werden. Man hat dann immer die Möglichkeit, sich mit Hilfe der Vorrichtung erhitzte Getränke zu bereiten. Es ist lediglich eine Stromquelle erforderlich, wofür in Kraftfahrzeugen das 12-Volt-Stromnetz oder 24-Volt-Stromnetz über den Zigarettenanzünderanschluß verwendet werden kann.

Die Erfindung wird im folgenden anhand einer vorteilhaften Ausführungsform unter Bezugnahme auf die beigefügten Zeichnungen beschrieben. Es zeigen:
- Fig. 1: eine Gesamtansicht des Prinzips der Vorrichtung, des Sammelbehälters und einer Halterung, teilweise im Schnitt;
- Fig. 2: die Vorrichtung der Erfindung im Schnitt;
- Fig. 3 bis 8: unterschiedliche Schritte bei der Benutzung der Vorrichtung der Erfindung;
- Fig. 9: einen Siebfilter, der in den Sammelbehälter eingesetzt werden kann, in verschiedenen Darstellungen; und
- Fig. 10: im Schnitt den Sammelbehälter mit dem Siebfilter der Fig. 9.

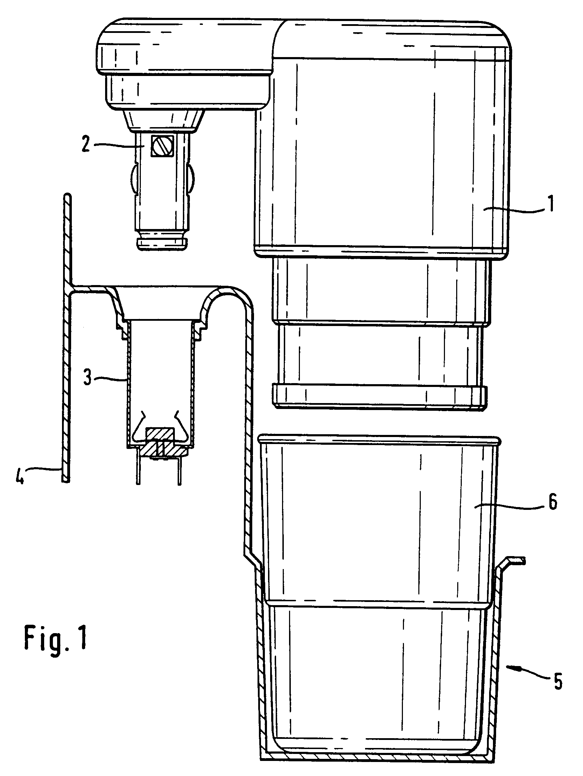

Wie dies in Fig. 1 gezeigt ist, weist die erfindungsgemäße Vorrichtung 1 einen Stecker 2 auf, mit dem sie in eine Steckdose 3 eines tragbaren Behälters 4 eingesetzt werden kann. Der tragbare Behälter 4 ist mit einer Mulde 5 zum Aufnehmen eines Sammelbehälters 6 versehen, in den die erfindungsgemäße Vorrichtung eingesetzt werden kann, wenn sie nach unten bewegt wird, wobei auch der Stecker 2 in die Steckdose 3 eingesetzt wird.

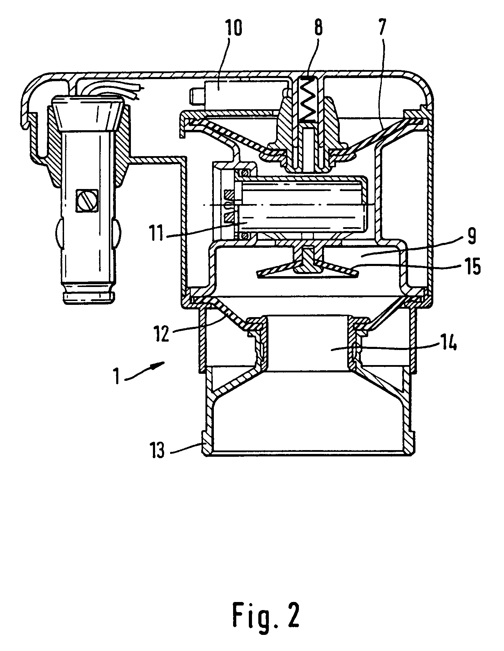

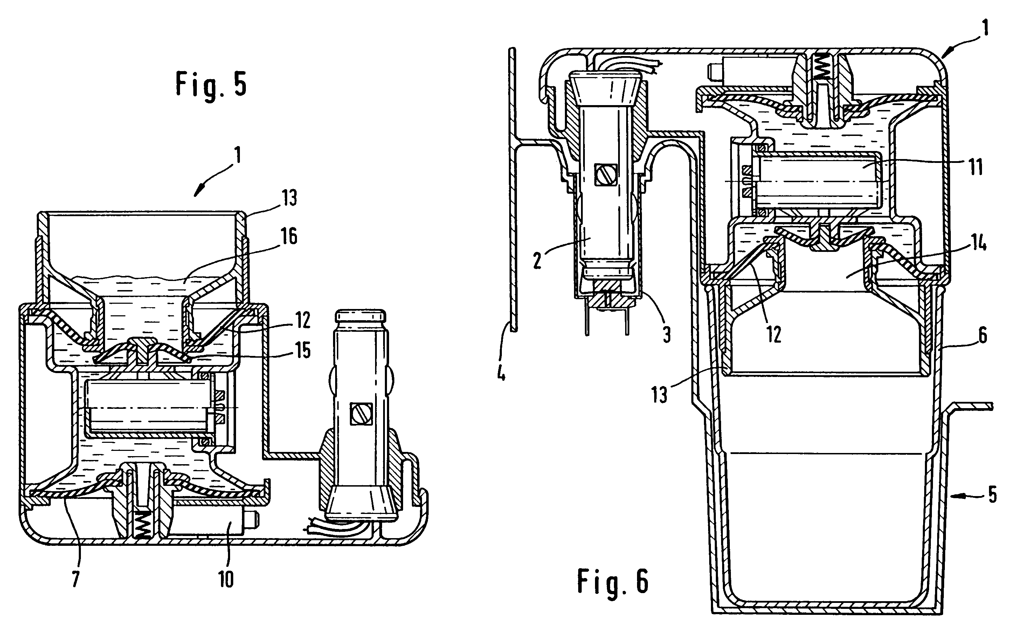

Die erfindungsgemäße Vorrichtung 1 weist eine obere Membran 7 auf, die durch eine Feder 8 nach innen mit Druck beaufschlagt ist. Wird die Membran 7 mit dem daran befestigten Schaltkegel durch Überdruck des Flüssigkeitsvorratsbehälters 9 nach außen (in Fig. 2 nach oben) gedrückt, so wird ein Mikroschalter 10 durch die Schräge des Schaltkegels beim Hub geschaltet, so daß eine Heizpatrone 11 im Flüssigkeitsvorratsbehälter 9 mit Strom versorgt werden kann. Der Boden 12 des Flüssigkeitsvorratsbehälters 9 ist ebenfalls membranartig ausgebildet, wobei die Membran zwei stabile Stellungen hat, nämlich einmal die in Fig. 2 gezeigte nach außen gerichtete Stellung und die z.B. in Fig. 5 gezeigte nach innen gerichtete Stellung. An der Membran 12 ist ein Trichter 13 befestigt. Der membranförmige Boden 12 weist eine mittige Öffnung 14 auf. Dieser Öffnung 14 gegenüber steht ein elastisches tellerförmiges Element 15, das im undeformierten Zustand so geformt ist, wie ein Kegelmantel.

Die Wirkungsweise der Vorrichtung ist die folgende.

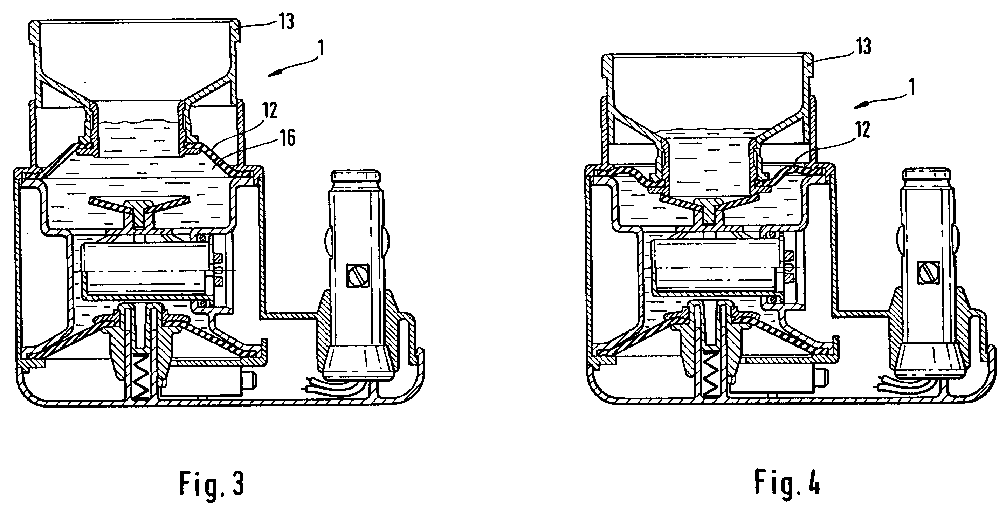

Zunächst wird die in Fig. 2 dargestellte Vorrichtung 1 umgedreht, so daß sie auf dem Kopf steht. Bei dieser in Fig. 3 gezeigten Stellung wird sie mit Flüssigkeit 16 unter Zuhilfenahme des Trichters 13 gefüllt. Anschließend wird dann der Trichter 13 heruntergedrückt, wodurch die Bodenmembran 12, wie dies in Fig. 4 gezeigt ist, von der nach außen gewölbten Stellung in die in Fig. 5 gezeigte nach innen gewölbte Stellung umklappt. Dabei wird dann das tellerförmige Element 15 nach innen deformiert und dichtet nunmehr den Boden ab. Durch den erzeugten Überdruck wird auch die Membran 7 nach außen gedrückt und schließt dadurch den Mikroschalter 10. Die Vorrichtung 1 wird dann umgedreht, wobei noch im Trichter 13 vorhandene überschüssige Flüssigkeit 16 weggeschüttet wird. Handelt es sich hierbei nicht um Wasser, sondern z.B. um Milch, so kann selbstverständlich beim Befüllen weniger Flüssigkeit eingefüllt werden, so daß keine Flüssigkeit weggeschüttet werden muß.

Die Vorrichtung 1 wird dann in den Sammelbehälter 6 eingesetzt, wie dies in Fig. 6 dargestellt ist, wobei der Stecker 2 in die Steckdose 3 eines Behältnisses 4 eingesetzt wird, das eine Mulde 5 zum Aufnehmen des Sammelbehälters 6 aufweist. Der Trichter 13 wird dabei teilweise in den Sammelbehälter 6 eingeführt.

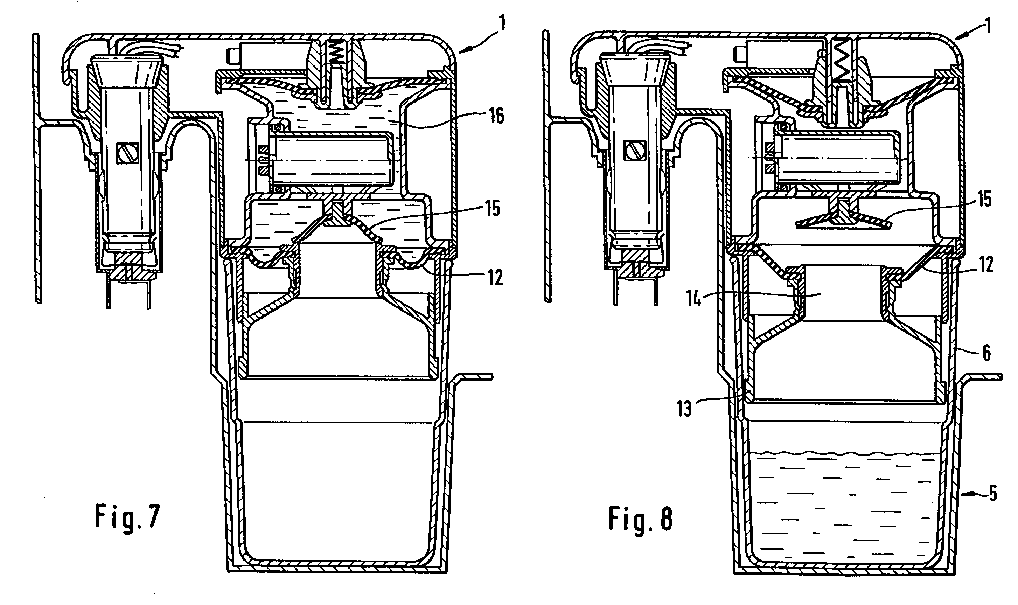

Wird nun Strom zugeführt, so wird das Heizelement 11 erwärmt, wodurch sich die Flüssigkeit 16 erwärmt. Die Bodenmembran 12 wird allmählich nach unten gedrückt, wobei das tellerförmige elastische Element 15 zunächst noch folgt und den Flüssigkeitsvorratsbehälter 9 noch geschlossen hält. Bei der in Fig. 7 gezeigten Stellung befindet sich die Bodenmembran 12 in einem Zustand, kurz bevor sie nach unten abklappt, wie dies in Fig. 8 gezeigt ist. In dieser Stellung hat sich dann die Bodenmembran 12 bzw. die ringförmige Öffnung 14 vom tellerförmigen elastischen Element 15 gelöst, das in seine ursprüngliche Stellung zurückkehrt. Durch den großen Öffnungsquerschnitt kann dann die Flüssigkeit nach unten in den Sammelbehälter 6 sehr schnell und plötzlich ausströmen. Dabei wird dann im Sammelbehälter 6 oder im Trichter 13 vorher untergebrachtes Brühmaterial aufgebrüht. Nachdem die Vorrichtung 1 nach oben abgezogen ist, kann auch der Sammelbehälter 6 aus der Mulde 5 entnommen werden, und das Getränk oder die Suppe kann genossen werden.

Das tellerförmige elastische Element wirkt dabei auch als Teil eines Sicherheitsventils. Bei einem Defekt der Trichterführung oder einer Manipulation des Verwenders, kann das elastische tellerförmige Element 15 den zur Öffnung des Ventils erforderlichen Hub nicht durchführen. In diesem Fall wird der Innendruck im Wasserbehälter steigen, und bevor der Behälter Schaden nimmt, rutscht das elastische tellerförmige Element 15 des Ventils durch Verformung vom Sitz und wird in die Hülse 14 gepreßt. Die dabei entstehende Undichtigkeit und der Druckabbau schalten das Gerät aus.

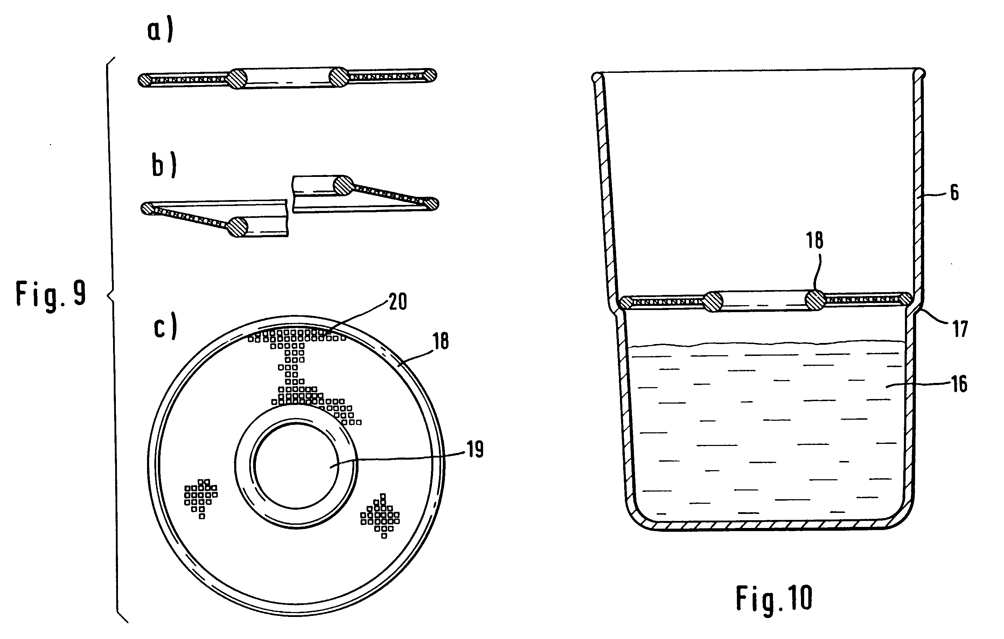

Wie dies aus den Figuren ersichtlich ist, weist der Sammelbehälter 6 eine Stufe 17 auf, auf die ein Siebfilter 18 aufgesetzt werden kann, das in Fig. 9 gezeigt ist. Dieser Siebfilter 18 weist eine mittige Öffnung 19 auf, durch die beim Brühvorgang die Flüssigkeit leicht eintreten kann. Durch das im Randbereich vorgesehene Sieb 20 können einerseits beim Trinken feste Bestandteile zurückgehalten werden. Andererseits kann das Überschwappen des Getränks im bewegten Fahrzeug verhindert werden.

## Patentansprüche

1. Vorrichtung zum Erhitzen einer trinkbaren Flüssigkeit (16) mit einem Flüssigkeitsvorratsbehälter (9) und einem darin angeordneten elektrischen Heizelement (11), wobei der Flüssigkeitsvorratsbehälter (9) ein Ventil (12,15) aufweist, das unten im Boden des Flüssigkeitsvorratsbehälters (9) angeordnet ist, dessen eine Dichtfläche der Rand einer Öffnung (14) des Bodens ist und das sich bei vorgegebenem Behälterinnendruck aufgrund Auswölbens des Bodens nach außen nicht selbsttätig umkehrbar öffnet, und wobei die Stromzuführung zum Heizelement (11) so ausgebildet ist, daß sie unterbrochen wird, wenn der Druck im Flüssigkeitsvorratsbehälter (9) im wesentlichen gleich dem Atmosphärendruck ist, welche Vorrichtung auf einen Sammelbehälter (6) für die Flüssigkeit (16) aufsetzbar ist, dadurch gekennzeichnet, daß die andere Dichtfläche des Ventils ein tellerförmiges Element (15) aus elastischem Material ist, das in seinem unbelasteten Zustand im wesentlichen kegelförmig mit zum Inneren des Flüssigkeitsvorratsbehälters (9) gerichteter Kegelspitze geformt ist und an dieser Spitze gehalten wird.

2. Vorrichtung nach Anspruch 1, dadurch gekennzeichnet, daß der Boden (12) mit einem sich nach außen erweiternden Trichter (13) versehen ist.

3. Vorrichtung nach Anspruch 1 oder 2, dadurch gekennzeichnet, daß sie einen Stecker (2) für die Zuleitung elektrischen Stroms aufweist, der einen oder mehrere Stifte enthält, die parallel zur in Gebrauchsstellung vertikalen Achse der Vorrichtung (1) ist.

4. Vorrichtung nach einem der Ansprüche 1 bis 3 mit einem Sammelbehälter (6), dadurch gekennzeichnet, daß der Sammelbehälter (6) ein Siebfilter (18) mit einer mittigen Öffnung (19) aufweist.

5. Behältnis zum Aufnehmen einer Vorrichtung nach einem der Ansprüche 1 bis 4 und eines Sammelbehälters, dadurch gekennzeichnet, daß es eine Steckdose (3) zum Einführen des Steckers (2) sowie eine Ausnehmung (5) zum Einsetzen des Sammelbehälters (6) aufweist.

## Claims

1. Device for heating a drinkable liquid (16), having a liquid reservoir (9) and an electrical heating element (11) arranged therein, the liquid reservoir (9) having a valve (12, 15) which is arranged at the bottom in the base of the liquid reservoir (9), one sealing face of said valve being the rim of an opening (14) in the base, and said valve, at a predetermined internal pressure in the reservoir, opening, as a result of the base bulging outwards, in a manner such that said valve is not automatically reversible, and the power supply to the heating element (11) being so designed that it is interrupted if the pressure in the liquid reservoir (9) is essentially equal to atmospheric pressure, which device can be placed on a collection vessel (6) for the liquid (16), characterised in that the other sealing face of the valve is a plate-shaped element (15) made of elastic material, which in its unstressed state is of essentially conical shape with the apex of the cone facing towards the interior of the liquid reservoir (9) and which is held at said apex.

2. Device according to Claim 1, characterised in that the base (12) is provided with a funnel (13) which widens outwards.

3. Device according to Claim 1 or 2, characterised in that it has a plug (2) for the electrical power supply, which plug contains one or more pins which is (sic) parallel to the vertical axis of the device (1) when the latter is in the use position.

4. Device according to one of Claims 1 to 3 having a collection vessel (6), characterised in that the collection vessel (6) has a filtering screen (18) with a central opening (19).

5. Receptacle for accommodating a device according to one of Claims 1 to 4 and a collection vessel, characterised in that it has a socket (3) for insertion of the plug (2) and a recess (5) into which the collection vessel (6) is placed.

## Revendications

1. Dispositif pour chauffer un liquide potable (16) comportant un réservoir de stockage de liquide (9) et un élément chauffant électrique (11) disposé à l'intérieur de ce dernier, le réservoir de stockage de liquide (9) comportant une soupape (12, 15) qui est disposée en bas dans le fond du réservoir de stockage de liquide (9), soupape dont une surface d'étanchéité est constituée par le bord d'une ouverture (14) du fond et qui s'ouvre à une pression interne prédéterminée du réservoir, sous l'effet d'un bombement vers l'extérieur du fond, sans pouvoir être rappelée automatiquement, l'alimentation en courant de l'élément chauffant (11) étant alors réalisée de telle sorte qu'elle soit interrompue lorsque la pression dans le réservoir de stockage de liquide (9) est sensiblement égale à la pression atmosphérique, ledit dispositif pouvant être mis en place sur un récipient collecteur (6) pour le liquide (16), caractérisé en ce que l'autre surface d'étanchéité de la soupape est constituée par un élément en forme de coupelle (15) en matière élastique, qui, dans son état non sollicité, a une forme sensiblement conique, avec la pointe du cône dirigée vers l'intérieur du réservoir de stockage de liquide (9), et qui est maintenu au niveau de cette pointe.

2. Dispositif selon la revendication 1, caractérisé en ce que le fond (12) est muni d'un entonnoir (13) s'évasant vers l'extérieur.

3. Dispositif selon la revendication 1 ou 2, caractérisé en ce qu'il comporte un connecteur enfichable (2) pour l'amenée de courant électrique, qui contient une ou plusieurs broches qui sont parallèles à l'axe vertical, en position d'utilisation, du dispositif (1).

4. Dispositif selon l'une des revendications 1 à 3, muni d'un récipient collecteur (6), caractérisé en ce que le récipient collecteur (6) comporte un filtre-tamis (18) présentant une ouverture centrale (19).

5. Réceptacle destiné à recevoir un dispositif selon l'une des revendications 1 à 4 et un récipient collecteur, caractérisé en ce qu'il comporte une douille d'enfichage (3) pour l'introduction du connecteur (2), ainsi qu'un renfoncement pour la mise en place du récipient collecteur (6).
